# EUROPEAN PATENT APPLICATION

(11) **EP 2 270 874 A2**
(43) Date of publication of application: **05.01.2011**
(21) Application number: 10386008.6
(22) Date of filing: 16.06.2010
(51) Int. Cl.: H01L 31/058

(54) **Thermo-electric double faced solar collector and method of double collection of solar energy**

(30) Priority: 17.06.2009 GR 20090100332
(71) Applicant: Falldin, Lars-Ake, 175 62 P.Faliron (GR)
(72) Inventor: Falldin, Lars-Ake, 175 62 P.Faliron (GR)

(57) **Abstract**

The thermo-electric double faced solar collector is constructed fom a metallic frame (6), with two functional facing sides, with alternating or simultaneous function, for the double collection of solar radiation. The one facing side is of thermodynamic mode (A) and is heating some kind of liquid, which successively is transfered within one or more pipes (1) from the collective surface (2) towards storage or usage. The other opposite facing side is of photovoltaic mode (B) and collects photovoltaic energy. The choice of the functional side (A) or (B) is acheived by correlative rotation of the frame (6) towards the sun. When the thermo-electric double faced solar collector functions as photovoltaic (B), for the production of electrical current, then the opposite thermodynamic side (A) can perform a cooling effect on the frame (6), thus producing domestic hot water from the overheating of the photovoltaic cells (12). The choice of alternating the collectors two functions is based mainly on the seasons of the year, thermodynamic (A) for the production of hot liquids during winter months and photovoltaic (B) for the production of electrical current during summer months.

## Description

The invention refers to collectors of solar energy, double faced, for the exploitation of both the direct solar radiation and the incident solar radiation and especially for the conversion of the solar energy, alternatively by the rotation of the collector, into heating of liquids (thermodynamic) as well as into electrical energy by photovoltaic cells (photovoltaic).

This is acheived by the incorporation of both methods of energy absorption into one double faced solar collector, on the one side (A) the thermodynamic method and on the other side (B) the photovoltaic method.

Each functional facing side, (A) or (B), constitutes the main functional facing side when, by the rotation of the collector, it is turned towards the direct solar radiation.

The ultimate using purpose of the collector is the ability, for the user, to choose by desire, the kind of energy he wants, depending on the seasonal period and the kind of energy needs occuring at any moment.

Up to date, manufactured solar collectors consist of two different product categories. On the one hand the thermodynamic heating collectors for liquids or steam and on the other hand the photovoltaic collectors producing electrical energy.

Some photovoltaic collectors of solar energy have incorporated cooling systems for the photovoltaic cells, with a simultaneous heating of liquids for heating of water, being characterized as hybrid photovoltaic collectors.

Generally the various altering constructions of hybrid solar collectors consists of a combination of the two functions, but in series and from the same functional facing side, where always the thermodynamic collecting surface is located behind the photovoltaic collecting surface which always consist the main functional system.

These hybrid collectors can, by the method of absorption, collect the additive heat released by the photovoltaic cells within the frame, but they are not in place to function clearly thermodynamically during the winter season.

The main purpose, of all up to date constructions, of hybrid solar collectors is not their alternating function, as for space heating or heating of domestic hot water, etc. but the, by priority, cooling of the photovoltaic cells during the production of electrical current from the photovoltaic cells.

The advantage of my invention is that it consists of a multi-collector, double faced and double functioning, which combines the two methods of energy collection incorporated into the same construction frame, which also have the ability of rotation.

Characteristics are that each facing side (A) or (B) consists, periodically, the main functional surface, depending on the season of the year and the rotation of the collector.

Characteristics are also the fact that, when the collector functions with facing side (A) or (B) as main surface for collecting of solar energy from the direct solar radiation, then simultaneously the opposite functional facing side functions as slave collecting surface for the collection of the incident and the reflected solar radiation.

During winter months when by percentage, the side (A) with the thermodynamic element produces much more energy, as for space heating as well as for heating of domestic hot water, then the collector is turned with its thermodynamic facing side (A), as main funtional surface, towards the direct solar radiation (C).

On the contrary during the summer months, when the needs for space heating and heating of domestic hot water are seriously reduced, then the solar collector is turned with it facing side (B) with the photovoltaic elements, as main functional surface, towards the direct solar radiation and thus utilizing the increased direct summer solar radiation (C) for the production of electrical current.

One problem with up to date constructions of solar collectors, for heating and domestic hot water, is their overheating during summer months when there is no need for space heating and neither for much domestic hot water and often the solar collectors have to be covered totally or at least partly, a problem especially serious in large installations with several square meters of solar collectors for space heating.

The solution offered by my invention is that in summer the collectors can be turned around (E) by 180° in order to change from thermodynamic function into photovoltaic function in order to avoid the thermodynamic overheating during summer months.

Also there is an ability of simultaneous utilization of the collectors two functions during summer months, that is to say, photovoltaic main function from the direct solar radiation at the one side (B) and thermodynamic slave function from the incident radiation (D) on the back side (A).

One serious problem of the photovoltaic collectors during the summer months, is the reduction in output when producing electrical energy, due to the increased temperatures in the sourrounding envirement as well as within the space of the photovoltaic frames.

The solution offered by my invention to this problem, when utilizing the collectors photovoltaic side (B) for production of electrical energy, is the simultaneous utilization of the opposite thermodynamic facing side (A) for the heating of domestic hot water, by heat absorption from the air space (11) below the back side of the photovoltaic element, that is to say, the heat absorption (F) through the metallic surface (10) of the main body (6) of the collector and towards the liquid tube (1).

Even in this case my invention differs from all the other makes on the market because, instead of accomplishing the cooling effect by an, in series located surface, behind the photovoltaic elements, it is acheived by the usage of the opposite functional side of the solar collector.

The result of this double and simultaneous function is the contineous cooling of the photovoltaic elements, with consequence the increased output of the photovoltaics cells during production of electrical energy.

One advantage of the thermo-electric double faced solar collector during the winter months is the simultaneous utilization of the direct solar radiation (C) and the incident and the reflected indirect radiation (D) at the two facing sides of the solar collector, with purpose the simultanous heating of liquids at the main functional facing side (A) and the slave production of electrical current at the opposite functional facing side (B).

Another advantage of the thermo-electric double faced solar collector during summer months is the simultaneous utilization of the direct solar radiation (C) and the reflected indirect solar radiation (D) at the two facing sides of the solar collector, with purpose the simultaneous production of electricity at side (B) and the heating of liquids at side (A).

The new by my invention is consequently that it offeres two independent main functions within one construction frame which by the rotation (E), by means of mechanical automation or manual movement, can function either 100% in thermodynamic mode or 100% in photovoltaic mode and even with the simultaneous function of both facing sides.

My invention is described below with the help of an example of construction with references to attached drawings.

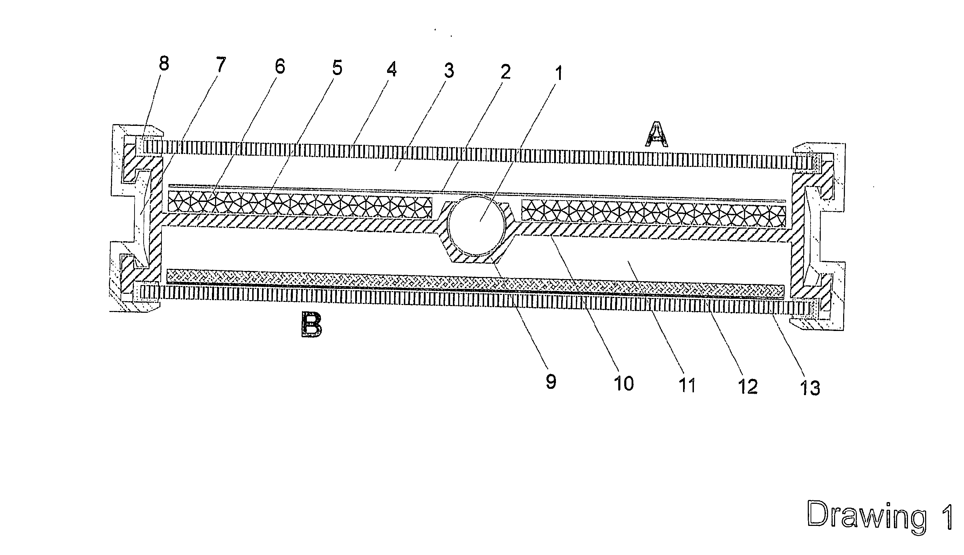

Drawing 1 shows the section of a thermo-electric double faced solar collector with a typical description of its main construction details.

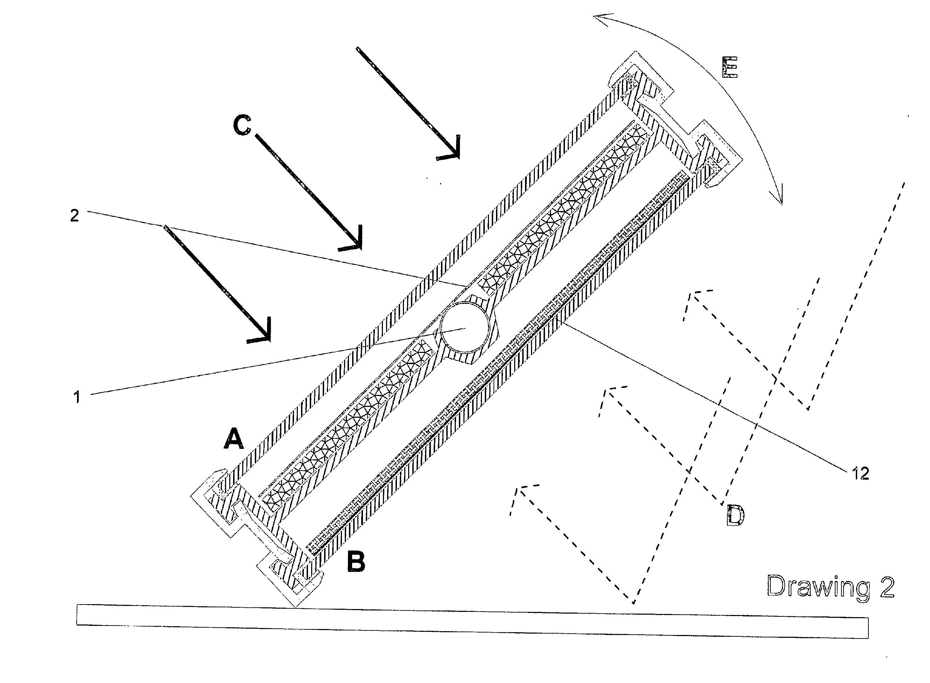

Drawing 2 shows the rotation (E) of the thermo-electric double faced solar collector into thermodynamic main utilization (A) of the direct solar radiation (C) and the simultaneous utilization of the opposite side (B) for the production of electrical current by the solar reflexions (D) and the indirect incident solar radiation.

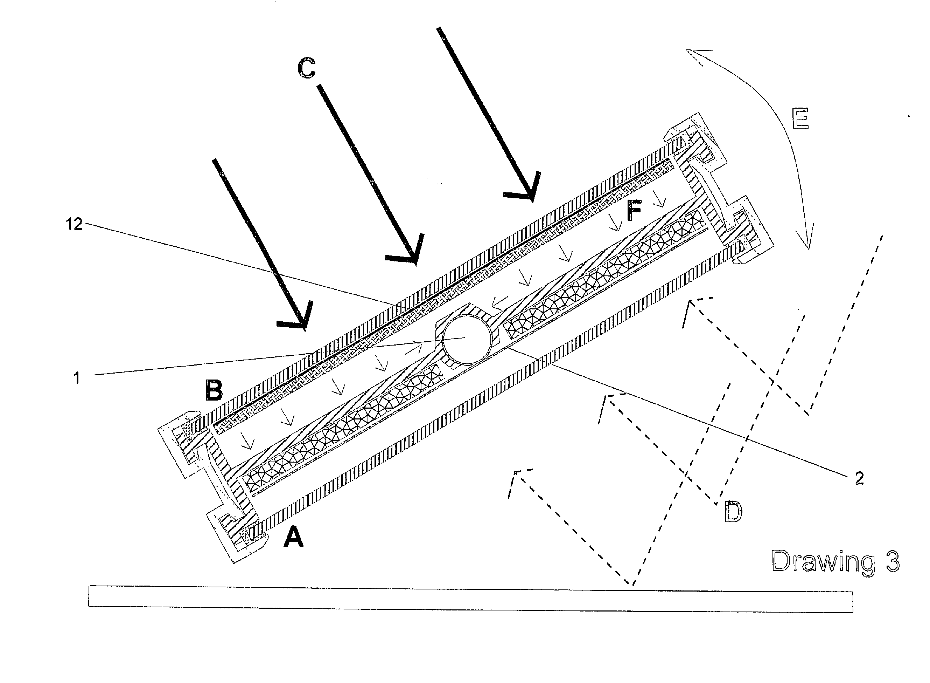

Drawing 3 shows the rotation (E) of the thermo-electric double faced solar collector into photovoltaic main utilization (B) of the direct solar radiation (C) and the simultaneous cooling of the photovoltaic elements, by absorption of heat energy (F) to the liquid pipe for space heating and domestic hot water.

Drawing 1 presents a thermo-electric double faced solar collector with, central element the liquid pipe (1) for the thermodynamical absorption of solar energy. The, on the pipe, attached surface (2) consist of a solar radiation collecting surface. The space (3) above the collecting surface works as thermo isolating air layer. The transparent cover (4) protects the collecting surface from weather conditions. The heat isolation (5) below the collecting surface reduces the heat losses. All these are attached to the main body (6) of the collector which can be made of metallic or plastic construction. The side profiles (7) simply fastens the two transparent covers together with the rubber-like profiles (8) for the weather-proofing of the transparent covers to the total.

Drawing 1 also presents the opposite side (B) for photovoltaic production of electrical current, where the same central pipe (1) inserted into a cavity (9) of the main body (6) absorbes the overheating from the photovoltaic cells, by cooling, through the surface (10) of the main body (6), the air space (11) which is formed behind the photovoltaic cells (12) which cells are attached to the transparent cover (13) by the known methods of adhesion.

Drawing 2 presents the thermo-electric double faced solar collector placed with its thermodynamic facing side (A) towards the direct solar radiation (C) and the photovoltaic rear facing side (B) towards the shadow for the utilization of incident solar radiation and the solar reflections (D). The choice of suitable utilization side is acheived by the rotation (E) of the solar collector.

Drawing 3 presents the thermo-electric double faced solar collector placed with its photovoltaic facing side (B) towards the direct solar radiation (C) and the thermodynamic facing side (A) towards the shadow for the utilization of the incident solar radiation and the solar reflections (D). The choice of suitable side of utilization is acheived by the rotation (E) of the solar collector. The overheating which occures in space (F) behind the photovoltaic cells is absorbed by the metallic surface (10) and the liquid pipe (1).

The philosophy of the thermo-electric double faced solar collector is the selection of one or the other functional system, thermodynamic mode or photovoltaic mode, depending on the seasonal period of the year and the present energy requirements.

During winter months the thermodynamic function with facing side (A) can perform approximately more than three times more energy in relation to the photovoltaic function, especially when the solar heated liquid is combined with a low temperature floor heating system, swimming pool heating or even for the heating of domestic hot water.

In this case the production of electrical current from the facing side (B) is seriously reduced but can easily cover the electric energy requirements of the heating installation itself, such as the function of water circulation pumps and the various systems of automation and control, so that the installation will be energy self-sufficient.

During summer months when there are no serious energy needs for the thermodynamic function although there is intensed solar radiation, then one can utilize the opposite photovoltaic facing side (B) of the thermo-electric double faced solar collector for the main purpose of producing electrical current.

In this case the production of domestic hot water is acheived with the thermodynamical absorption function (F) from the overheating of the photovoltaic cells, whereas simultaneous cooling effect of the photovoltaic cells occures, resulting in an output increase during the production of electrical energy from the cells.

For typical reasons I refer to my own greek Patent Diploma, with reference number 1006428 dated 11/6/2009, titled 'Rotating solar collector' and the international reference number (INT.CL8) F24J 2/04.

I also refer to my own recently deposited application to the greek patent services OBI, for patent application, and for which have been executed a 'simple research report', with application number 20090100332 dated 17/6/2009 and titled 'THERMO-ELECTRIC DOUBLE FACED SOLAR COLLECTOR AND METHOD OF DOUBLE COLLECTION OF SOLAR ENERGY'

## Claims

1. The thermo-electric double faced solar collector has as main function the thermodynamic function and is **characterized by** a metallic solar collector frame which has two opposite but simultaneously functioning facing sides, each facing side with different collection method of solar energy, the main facing side, the thermodynamic (A) on the one side for the heating of liquids and the secondary facing side, the photovoltaic (B) on the other side for the production of electrical current, by the rotation of the collector the exchange of functions is acheived, the photovoltaic mode from secondary function turns into main function and the thermodynamic mode from main function turns into secondary function, for the simultaneous on both facing sides collection of solar energy.

2. The thermo-electric double faced solar collector, is **characterized** according to claim (1), that in any position of rotation it is functioning simultaneously with its two facing sides (A) and (B) for the collection of solar energy, with a greater output at the main facing side, which is turned towards the direct solar radiation and with reduced output on the opposite secondary facing side, which collects the incident solar radiation and the reflections of the solar radiation.

3. The thermo-electric double faced solar collector is **characterized** according to claim (1) from the ability to rotate (E) so that it will expose sometimes the main facing side (A) towards the direct solar radiation (C) and other times the secondary facing side (B) towards the direct solar radiation (C), then characterizing as main facing side, the side which is turned towards the direct solar radiation and as secondary facing side, the side which is turned towards the incident solar radiation, though always with the simultaneous functioning of both facing sides, the main and the secondary.

4. The thermo-electric double faced solar collector is **characterized** according to claim (1) from that the one functional facing side (A) is of thermodynamic function and is heating some kind of liquid and the other funtional side (B) is of photovoltaic function and produces electrical current from the incorporated photovoltaic cells.

5. The thermo-electric double faced solar collector is **characterized** according to claim (1) from that when it is functioning with its photovoltaic facing side (B) for the production of electrical current, then simultaneously the thermodynamic facing side (A) is cooling, through the pipe (1) and the main body (6), the air space (11) behind the photovoltaic cells (12) and succesively the cells (12). The result of this is the reduction of functioning temperature of the photovoltaic cells and the increase in output of the photovoltaic cells.

6. The thermo-electric double faced solar collector is **characterized** according to claim (1) and (5) from that when it functions with is photovoltaic facing side (B) towards the direct solar radiation (C) for the production of electrical current then simultaneously the opposite thermodynamical facing side (A) produces hot water for space heating or domestic hot water, depending on the needs, through the pipe (1) and the selective surface (2).

7. The method of double solar energy collection with the thermo-electric double faced solar collector is **characterized** from that by rotation (E) is acheived, an alternating usage its two functional sides as main facing sides, which is from the thermodynamic facing side (A) the production of hot water for space heating or domestic hot water or swimming pool heating and from the opposite photovoltaic facing side (B) the production of electrical current from the incorporated photovoltaic cells, always with a simultaneous function of the secondary facing side at each correlative function of the main facing side.

8. The method of double solar energy collection with the thermo-electric double faced solar collector is **characterized** from that when it is functioning with its photovoltaic facing side (B) towards the direct solar radiation (C), for the production of electrical current, then by use of the opposite thermodynamic facing side (A) is acheived a cooling of the photovoltaic cells (12) through the pipe (1), the main body (6) and the collecting surface (2).
